# EUROPÄISCHE PATENTSCHRIFT

(11) **EP 2 669 156 B1**
(45) Veröffentlichungstag und Bekanntmachung des Hinweises auf die Patenterteilung: **01.02.2017**
(21) Anmeldenummer: 13169373.1
(22) Anmeldetag: 27.05.2013
(51) Int. Cl.: B62D 59/04

(54) **Anhänger-Rangierantrieb mit koaxialer Anordnung von Antriebskomponenten**
Trailer manoeuvring drive with coaxial arrangement of drive components
Entraînement de rangement pour remorque avec une disposition coaxiale des composants de l'entraînement

(30) Priorität: 29.05.2012 DE 102012010546
(43) Veröffentlichungstag der Anmeldung: 04.12.2013
(73) Patentinhaber: Truma Gerätetechnik GmbH & Co. KG, 85640 Putzbrunn (DE)
(72) Erfinder: Aemisegger, Steve, 81547 München (DE); Gumpp, Daniel, 56356 Neusäss (DE); Müller, Jochen, 85665 Moosach (DE); Schmid, Tobias, 85435 Erding (DE); Müssler, Klaus, 85235 Egenburg (DE); Fernandez, Ana Maria, 81739 München (DE); Müller, Jörg, 85658 Egmating (DE); Schaurer, Oliver, 85445 Oberding (DE); Möhring, Mario, 85408 Gammelsdorf (DE); Venschott, Mathias, 81825 München (DE)
(74) Vertreter: Prinz & Partner mbB

(56) Entgegenhaltungen:
- EP-A1- 2 208 661
- EP-A2- 1 225 090
- DE-U1-202009 001 675

## Beschreibung

Die Erfindung betrifft einen Rangierantrieb für einen Anhänger nach dem Oberbegriff des Anspruchs 1, insbesondere für Wohnwagen, Bootsanhänger, Pferdeanhänger, Marktanhänger, Lastanhänger und ähnliche.

Anhänger werden üblicherweise von Zugmaschinen gezogen. So ist es bekannt, dass ein Pkw einen Wohnwagen ziehen kann. Wenn der Anhänger von der Zugmaschine abgenommen ist, wird er meist von Hand in die endgültige Position geschoben. Jedoch werden heutzutage zunehmend Anhänger im Wohnwagenbereich angeboten, die aufgrund ihrer Größe und damit ihres Gewichts nur noch unter Mühen von Hand verschoben werden können. Daher wurden Rangier- bzw. Hilfsantriebe entwickelt, die es ermöglichen, einen Anhänger auch ohne Zugmaschine mit Motorunterstützung zu verschieben bzw. zu drehen.

In der EP 1 714 858 A1 wird ein Rangierantrieb für einen Fahrzeuganhänger mit einseitig gelagerter Antriebsrolle beschrieben. Der Rangierantrieb weist einen relativ zu einem Fahrgestell des Anhängers bewegbaren Träger auf, der einen Antriebsmotor und eine Antriebsrolle trägt. Ein Bewegungsmechanismus dient zum Bewegen des Trägers zwischen einer Ruheposition, in der Antriebsrolle von einem Rad des Anhängers getrennt ist, und einer Antriebsposition, in der die Antriebsrolle gegen das Rad des Anhängers gedrückt wird. Der Antriebsmotor treibt die Antriebsrolle über ein Getriebe an.

Ferner ist in der EP 1 225 090 A2 ein Rangierantrieb beschrieben, bei dem der Antriebsmotor eine Bremsfunktion aufweist, die eine elektromagnetische Bremswirkung zur Verfügung stellt, sofern der Antriebsmotor sich dreht.

Aus der DE 20 2009 001 675 U1 ist ein Rangierantrieb mit einer Bremseinrichtung bekannt. Die Bremseinrichtung wirkt in einem Getriebe, dass die Antriebsleistung zweier Antriebsmotoren auf die Antriebsrolle überträgt. Der Aufbau des Rangierantriebs beansprucht erheblichen Bauraum.

Aus der EP 2 208 661 A1 ist ein Rangierantrieb bekannt, bei dem sowohl der Antriebsmotor als auch das Getriebe innerhalb der Antriebsrolle angeordnet sind. Bei dem Antriebsmotor kann es sich um einen bürstenlosen Elektromotor handeln. Der Aufbau des Rangierantriebs ist sehr kompakt, erfordert aber einen nicht unerheblichen technischen Aufwand.

Aufgrund des beschränkten Platzangebots an der Unterseite eines Anhängers, insbesondere im Bereich der Anhängerräder bzw. Radkästen, ist ein Rangierantrieb anzustreben, der nur geringfügige Anforderungen an den erforderlichen Bauraum stellt.

Der Erfindung liegt die Aufgabe zugrunde, einen Rangierantrieb für einen Anhänger anzugeben, der einen einfachen und dennoch kompakten Aufbau ermöglicht.

Die Aufgabe wird durch einen Rangierantrieb für einen Anhänger mit den Merkmalen von Anspruch 1 gelöst. Vorteilhafte Ausgestaltungen sind in den abhängigen Ansprüchen angegeben.

Ein Rangierantrieb für einen Anhänger, mit einer Befestigungseinrichtung zum Befestigen an dem Anhänger, einem relativ zu der Befestigungseinrichtung bewegbaren Träger, einem von dem Träger gehaltenen Antriebsmotor, einer von dem Antriebsmotor drehend antreibbaren Antriebsrolle, und mit einer Bremseinrichtung zum Bremsen einer Drehbewegung der Antriebsrolle, ist dadurch gekennzeichnet, dass der Antriebsmotor und die Bremseinrichtung koaxial zueinander angeordnet sind und dass im Kraftfluss zwischen dem Antriebsmotor und der Antriebsrolle eine Getriebeeinrichtung vorgesehenen ist, die keine Selbsthemmung aufweist.

Der Rangierantrieb kann eine Bewegungseinrichtung aufweisen, zum Bewegen des Trägers zwischen einer Ruheposition, in der die Antriebsrolle von einem Rad des Anhängers getrennt ist, und einer Antriebsposition, in der die Antriebsrolle gegen das Rad des Anhängers gedrückt wird.

Der Rangierantrieb weist typischerweise den relativ zu der Befestigungseinrichtung bewegbaren Träger auf, der den Antriebsmotor und die Antriebsrolle trägt. Mit Hilfe der Bewegungseinrichtung kann der Träger zwischen der Ruheposition und der Antriebsposition hin- und herbewegt werden, sodass die Antriebsrolle bei Bedarf gegen das Rad des Anhängers, insbesondere gegen die Lauffläche des Anhängerrads angedrückt oder von dem Rad abgehoben wird. Dieser Aufbau ist zum Beispiel aus der EP 1 714 858 A1 bekannt.

Durch die koaxiale Anordnung des Antriebsmotors und der Bremseinrichtung ("Inline-Anordnung") können die beiden Komponenten sehr dicht zueinander angeordnet und gegebenenfalls sogar als Einheit aufgebaut werden. Dies ermöglicht eine vereinfachte Montage, indem zum Beispiel der Antriebsmotor und die Bremseinrichtung vormontiert werden können. Zudem lässt sich ein äußerst kompakter Aufbau realisieren. In dem Zusammenhang ist zu beachten, dass bei Rangierantrieben aus dem Stand der Technik bisher stets selbsthemmende Getriebe zwischen dem Antriebsmotor und der Antriebsrolle eingesetzt wurden. Die selbsthemmenden Getriebe gewährleisten, dass sich die Antriebsrolle nicht durch Einwirkung von außen, insbesondere durch Einwirkung des Anhängerrads, sondern ausschließlich durch den Antriebsmotor drehen lässt. Somit stellt die Selbsthemmung sicher, dass die Antriebsrolle im Stillstand, bei nicht aktiviertem Antriebsmotor, blockiert und insoweit als Bremse dient.

Nachteilig ist dabei der geringe Wirkungsgrad derartiger selbsthemmender Getriebe. Aufgrund der bei Anhängern häufig begrenzten elektrischen Ressourcen müssen dementsprechend große Batterien bereitgestellt werden, um die benötigte elektrische Energie für das Betreiben des Rangierantriebs zur Verfügung zu stellen.

Erfindungsgemäß wird ein Getriebe mit höherem Wirkungsgrad vorgeschlagen, das nicht selbsthemmend ist, also keine Selbsthemmung aufweist. Mithilfe der zusätzlichen bzw. separaten Bremseinrichtung ist dennoch ein zuverlässiges Bremsen der Antriebsrolle gewährleistet. Durch Anordnen dieser Bremseinrichtung koaxial zum Antriebsmotor lässt sich ein kompakter Aufbau realisieren, der nur einen begrenzten zusätzlichen konstruktiven Aufbau und unter Umständen sogar weniger Komponenten erfordert.

Der Antriebsmotor kann eine Antriebswelle aufweisen, wobei die Bremseinrichtung auf der Antriebswelle angeordnet sein kann. Das bedeutet, dass der Antriebsmotor seine Antriebsleistung auf die Antriebswelle aufbringt, während die Bremseinrichtung ihrerseits das Bremsmoment ebenfalls direkt in die Antriebswelle einleiten kann. Die Antriebswelle wird somit zum zentralen Antriebsbestandteil des Rangierantriebs.

Die Bremseinrichtung kann dabei insbesondere stirnseitig zu dem Antriebsmotor angeordnet sein.

Bei einer Ausführungsform kann im Kraftfluss zwischen dem Antriebsmotor und der Antriebsrolle eine Getriebeeinrichtung vorgesehen sein, wobei ein zu der Getriebeeinrichtung gehörendes Antriebszahnrad auf der Antriebswelle vorgesehen ist. Das Antriebszahnrad kann als separates Zahnrad auf die Antriebswelle aufgesetzt sein. Ebenso ist es möglich, das Antriebszahnrad direkt auf die Antriebswelle zu schneiden. Die Getriebeeinrichtung kann zweckmäßig sein, um die Drehzahl des Antriebsmotors zu reduzieren und in eine geeignete Drehzahl für die Antriebsrolle zu wandeln. Dementsprechend kann das vom Antriebsmotor erzeugte Antriebsdrehmoment vergrößert werden. Wenigstens ein Teil einer Steuerelektronik für den Antriebsmotor kann stirnseitig zu dem Antriebsmotor angeordnet sein, wobei die Steuerelektronik eine Platine aufweisen kann, die von der Antriebswelle durchdrungen wird. Ergänzend oder alternativ kann wenigstens ein Teil der Steuerelektronik seitlich zu dem Antriebsmotor angeordnet sein. Durch diese Anordnungen ist es möglich, die Steuerelektronik unmittelbar am Antriebsmotor anzuordnen, sodass nur sehr kurze Leitungswege erforderlich sind. Aufgrund der hohen elektrischen Leistungen, die der Antriebsmotor erfordert, müssen entsprechend hohe elektrische Ströme zu dem Antriebsmotor geführt werden. Dies gilt umso mehr, wenn die Betriebsspannung des Antriebsmotors aus Sicherheitsgründen abgesenkt ist, und zum Beispiel im Bereich üblicher Batteriespannungen liegt (wie zum Beispiel 12 Volt, 24 Volt oder 48 Volt). Die hohen elektrischen Ströme können die elektromagnetische Verträglichkeit (EMV) beeinträchtigen. Diesem Nachteil wird durch die sehr kurzen Leitungswege zwischen der Steuerelektronik und dem Antriebsmotor entgegengewirkt.

Wenn die Antriebswelle die Platine der Steuerelektronik durchdringt, zum Beispiel durch eine entsprechende Bohrung oder Ausnehmung, lässt sich die Steuerelektronik bei sehr guter Bauraumausnutzung unmittelbar stirnseitig dicht in den Motor anordnen.

Der Antriebsmotor kann stirnseitig eine Lagerplatte aufweisen. Die Lagerplatte kann somit in Form eines Lagerschilds Bestandteil des Antriebsmotors sein. Ebenso ist es möglich, dass die Lagerplatte bzw. der Lagerschild des Antriebsmotors auf einer weiteren Trägerplatte befestigt wird.

Ergänzend oder alternativ kann die Steuerelektronik auf der Lagerplatte angeordnet, insbesondere auf der Lagerplatte befestigt sein. Mit Hilfe der Lagerplatte ist es dann möglich, den Antriebsmotor und gegebenenfalls die Steuerelektronik bequem vorzumontieren, bevor dann die gesamte Einheit in dem Rangierantrieb verbaut bzw. an dem Träger befestigt wird.

Zwischen der Lagerplatte und der Steuerelektronik kann eine Steckverbindung vorgesehen sein, zum Übertragen eines elektrischen Stroms. Die Steckverbindung kann mehrere Steckkontakte aufweisen, deren Komponenten jeweils von der Lagerplatte und von der Steuerelektronik gehalten werden. Beim Zusammenmontieren der Steuerelektronik auf der Lagerplatte werden die Komponenten der Steckverbindung zusammengesteckt, so dass unmittelbar ein elektrischer Kontakt herstellbar ist. So ist es vereinfacht möglich, den von der Steuerelektronik für die Ansteuerung des Motors vorgesehenen Strom durch die Lagerplatte hindurchzuführen und dem Motor zuzuleiten.

Bei einer Ausführungsform ist eine Lüftungseinrichtung zum Kühlen des Antriebsmotors vorgesehen, wobei die Lüftungseinrichtung auf der Antriebswelle angeordnet ist. Die Lüftungseinrichtung wird auf diese Weise ebenfalls direkt von der Antriebswelle angetrieben, sodass kein zusätzlicher baulicher Aufwand erforderlich ist. Sie kann auch unmittelbar in den Antriebsmotor integriert werden, indem z.B. Flügel eines Kühllüfterrads an einem Läufer des Antriebsmotors vorgesehen sind.

Wenigstens zwei der folgenden Komponenten können auf einer gemeinsamen Achse, unter Umständen sogar koaxial zueinander in der angegebenen folgenden axialen Reihenfolge angeordnet sein: Bremseinrichtung, Antriebsmotor, Lagerplatte, Steuerelektronik, Antriebszahnrad. Das bedeutet, dass aus dieser Liste wenigstens zwei, zweckmäßigerweise auch mehr Komponenten ausgewählt werden können, die dann in der Reihenfolge zueinander anzuordnen sind, wie sie durch die Liste vorgegeben ist. Wenn somit alle Komponenten verbaut werden sollen, müssen sie axial in der Reihenfolge Bremseinrichtung - Antriebsmotor - Lagerplatte - Steuerelektronik - Antriebszahnrad angeordnet werden.

Der Antriebsmotor kann ein bürstenloser Elektromotor mit einem Außenläufer sein. Im Stand der Technik ist es üblich, dass der Antriebsmotor als bürstenbehafteter Motor, zum Beispiel als Universalmotor ausgeführt ist. Ein bürstenloser Elektromotor hat demgegenüber den Vorteil, hinsichtlich seiner Drehzahl sehr präzise regelbar zu sein. Dies ermöglicht es, beim Betrieb des Rangierantriebs unterschiedliche Drehzahlen der Antriebsrollen mit hoher Genauigkeit vorgeben zu können. Ein Außenläufermotor hat zudem den Vorteil, dass er ein höheres Drehmoment erzeugt als ein Innenläufermotor. Zudem kann aufgrund des erhöhten Drehmoments die Drehzahl des Motors reduziert werden, was sich vorteilhaft für die Auslegung eines zwischen dem Antriebsmotor und der Antriebsrolle erforderlichen Getriebes, insbesondere für die Anforderung an die Übersetzungsverhältnisse, auswirkt.

Durch die Bauform eines Außenläufermotors können darüber hinaus das Bauvolumen und das Gewicht spürbar reduziert werden, sodass ein hohes Leistungsgewicht erreicht werden kann. Zudem ist der Außenläufermotor besser kühlbar als ein Innenläufermotor.

Der Antriebsmotor kann stirnseitig eine Lagerplatte aufweisen. Ergänzend oder alternativ kann die Steuerelektronik auf der Lagerplatte angeordnet sein. Ebenso ist es möglich, dass der Antriebsmotor stirnseitig an einer Lagerplatte befestigt ist. Mit Hilfe der Lagerplatte ist es möglich, den Antriebsmotor und gegebenenfalls die Steuerelektronik bequem vorzumontieren, bevor dann die gesamte Einheit in dem Rangierantrieb verbaut wird.

Der Antriebsmotor kann außerhalb der Antriebsrolle angeordnet sein, was den konstruktiven und baulichen Aufwand mindert.

Die Bremseinrichtung kann direkt an dem Außenläufer befestigt sein. Auf diese Weise kann die Bremseinrichtung ein Drehen des Motors bzw. des Außenläufers verhindern, was folglich auch zu einem Blockieren der Antriebsrolle führt. Dabei ist es auch möglich, dass die Bremseinrichtung direkt im Außenläufer, quasi als Teil der Glocke des glockenförmigen Außenläufers angeordnet wird.

Bei einer Variante kann die Bremseinrichtung an dem Motorgehäuse, also an einem den Antriebsmotor umgebenden Gehäuse befestigt sein. Dadurch ist es möglich, die Bremseinrichtung räumlich sehr nah an den Motor anzuordnen.

Die Bremseinrichtung kann je nach Variante als Feststell- bzw. Haltebremse dienen oder zum Regulieren der Geschwindigkeit, zum Beispiel bei einer Bergabfahrt des Anhängers, genutzt werden.

Ein Regulieren der Geschwindigkeit ist insbesondere mit elektrischen Bremsprinzipien möglich. So kann die Bremseinrichtung nach dem Prinzip Gegenstrombremsung wirken, so dass ein entgegen gerichteter Strom das erforderliche Bremsmoment erzeugt. Denkbar ist auch eine Gleichstrombremsung. Andere elektrische Bremsen arbeiten als Wirbelstrombremse, Hysteresebremse oder Magnetpulverbremse.

Für die Realisierung einer elektrischen Bremse ist es z.B. möglich, mit Hilfe eines Wicklungskurzschlusses eine Bremswirkung durch den Antriebsmotor zu erzeugen.

Im vorliegenden Fall liegt jedoch der Schwerpunkt auf der Ausgestaltung der Bremseinrichtung als mechanische Bremseinrichtung oder als elektromechanische Bremseinrichtung, zum Beispiel als Magnetbremse, um die Bremseinrichtung als Feststellbremse zu verwirklichen. Die Feststellbremse dient dann nur im Notfall dazu, die Fahrt des Anhängers bzw. die Drehung der Antriebsrolle abzubremsen. Vielmehr soll die Feststellbremse ein Halten der Antriebsrolle im Stillstand gewährleisten.

Wenn die Bremseinrichtung als Feststellbremse ausgestaltet ist und die Abbremsung während der Fahrt lediglich durch eine elektrische Bremsung des Antriebsmotors (z.B. obiger Wicklungskurzschluss) erfolgt, stellt die Bereitstellung der Bremseinrichtung als Feststellbremse eine doppelte Sicherheit dar. Die Bremseinrichtung kann dann nötigenfalls zusätzlich aktiviert werden, wenn die elektrische Motorbremsung nicht ausreicht.

Magnetbremsen können als Kegel-, Backen- oder Lamellenbremsen ausgestaltet sein.

Der Antriebsmotor kann einen Innenstator aufweisen, wobei der Außenläufer den Innenstator glockenförmig umgibt. Dabei kann es vorteilhaft sein, wenn der Außenläufer ein Kühllüfterrad aufweist, also das Kühllüfterrad direkt in die Glocke des Außenläufers integriert ist.

Bei modernen Rangierantrieben wird zunehmend darauf geachtet, dass sie optisch ansprechend gestaltet sind, was insbesondere dazu führt, dass die technischen Funktionsträger durch entsprechend gestaltete Verkleidungen abgedeckt werden. Gerade bei längeren Rangierfahrten mit dem Rangierantrieb ist jedoch eine effektive Motorkühlung notwendig. Bei Nutzung des Außenläufermotors kann in den Außenläufer bzw. in die Glocke des Außenläufers das Kühllüfterrad integriert sein, sodass kein Anbau eines separaten Gebläses an die Motorwelle erforderlich ist.

Der Innenstator kann mit der Lagerplatte zu einer baulichen Einheit integriert sein. Insbesondere kann der Innenstator eine die Motorwelle umgebende Hülse bzw. Nabe aufweisen, die mit der Lagerplatte einteilig verbunden ist.

Je nach Aufbau des Rangierantriebs kann die Drehachse des Antriebsmotors parallel oder senkrecht oder in einem schrägen Winkel, also weder parallel noch senkrecht, zu der Drehachse der Antriebsrolle verlaufen. Da der bürstenlose Außenläufermotor mit der koaxial angebauten Bremseinrichtung sehr kompakt baut, eignet er sich grundsätzlich für jede dieser Anordnungen.

Ein Aspekt der Erfindung sieht vor, dass im Antriebsstrang der Rangierantrieb eine nachgiebige Kupplungseinrichtung vorgesehen ist, über die schräggestellte und/oder nicht parallele Wellen miteinander gekoppelt werden können und/oder eine Schwingungsdämpfung erfolgt. Hierdurch wird die Laufeigenschaft des Rangierantriebs verbessert.

Diese und weitere Vorteile und Eigenschaften der Erfindung werden nachfolgend anhand von Beispielen unter Zuhilfenahme der begleitenden Figuren näher erläutert. Es zeigen:
**Fig.1** ein Beispiel für eine perspektivische Außenansicht eines Rangierantriebs;
**Fig. 2** in schematischer Draufsicht mit teilweiser Schnittdarstellung einen Rangierantrieb mit parallelen Drehachsen von Antriebsmotor und Antriebsrolle;
**Fig. 3** eine schematische Draufsicht eines Rangierantriebs mit rechtwinklig zueinander stehenden Drehachsen von Antriebsrolle und Antriebsmotor;
**Fig. 4** eine Schnittdarstellung eines Teils eines Rangierantriebs gemäß Fig. 2;
**Fig. 5** eine Ausschnittsvergrößerung einer Lagerplatte mit Steuerungsplatine,
**Fig. 6** eine Schnittdarstellung eines Teils eines Rangierantriebs gemäß einer weiteren Ausführungsform, und
**Fig. 7** ein Beispiel für ein verwendbares Ritzel (Figur 7a) sowie einer verwendbaren Kupplungseinrichtung (Figur 7b).

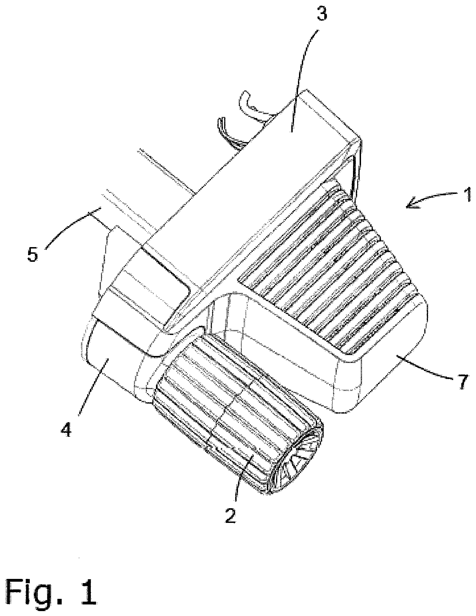

Figur 1 zeigt in Perspektivansicht einen Rangierantrieb mit einem unter einer Abdeckung 7 angeordneten Antriebsmotor 1 und einer von dem Antriebsmotor 1 drehend antreibbaren Antriebsrolle 2.

Der Antriebsmotor 1 und die Antriebsrolle 2 sind von einem Träger 3 gehalten. Im Inneren des Trägers 3 ist auch eine Getriebeeinrichtung 4 angeordnet, die dazu dient, die verhältnismäßig hohe Drehzahl des Antriebsmotors 1 in eine niedrigere Drehzahl für die Antriebsrolle 2 zu übersetzen. Die Getriebeeinrichtung 4 ist in Figur 1 nur in Außenansicht dargestellt. Insbesondere kann die Getriebeeinrichtung 4 mehrere Stufen aufweisen, um das gewünschte gesamte Übersetzungsverhältnis zu erreichen. Der Träger 3 wird von einer Befestigungseinrichtung 5 gehalten, die ihrerseits an einem nicht dargestellten Fahrgestell eines Anhängers angebracht werden kann. Zum Beispiel kann die Befestigungseinrichtung 5 in Form eines Vierkantrohrs ausgeführt sein, das auf ein entsprechendes Querrohr (nicht dargestellt) aufgeschoben werden kann, wobei das Querrohr wiederum an der Unterseite des Anhängers befestigt ist.

Der Träger 3 ist relativ zu der Befestigungseinrichtung 5 mit Hilfe einer nicht dargestellten Bewegungseinrichtung linear hin und her bewegbar. Zu diesem Zweck kann die Befestigungseinrichtung 5 eine Halterung aufweisen, in der der Träger 3 führbar ist, so dass er z.B. linear hin und her bewegt werden kann. Auf diese Weise kann der Träger 3 zwischen einer Ruheposition, in der die Antriebsrolle 2 von einem in Figur 1 nicht dargestellten Rad des Anhängers getrennt ist, und einer Antriebsposition, in der die Antriebsrolle 2 gegen das Rad des Anhängers gedrückt wird, hin und her bewegt werden.

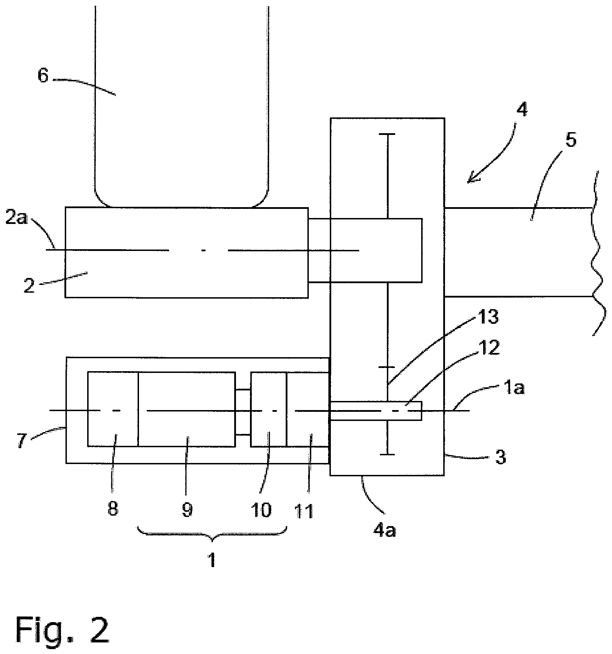

Figur 2 zeigt den Aufbau des Rangierantriebs von Figur 1 in schematischer Schnittdarstellung.

Dabei wird der Rangierantrieb in einem Zustand gezeigt, in dem die Antriebsrolle gegen ein Rad 6 des Anhängers angedrückt wird (Antriebsposition).

Der Antriebsmotor 1 ist als bürstenloser Elektromotor mit Außenläufer aufgebaut und wird durch die Abdeckung 7 abgedeckt. Stirnseitig, nämlich an der rückwärtigen Stirnseite des Antriebsmotors 1 ist koaxial zu dem Antriebsmotor 1 eine Bremseinrichtung 8 vorgesehen, die insbesondere beim Stillstand des Antriebsmotors 1 zur Anwendung kommt und ein ungewolltes Drehen der Antriebsrolle 2 verhindern soll.

Die Bremseinrichtung 8 ist an der Stirnseite eines Außenläufers 9 des Antriebsmotors 1 angeordnet und wirkt direkt auf eine als Antriebswelle 12 dienende Motorwelle. Der Außenläufer 9 umgibt glockenförmig einen Innenstator 10, von dem in Figur 2 nur der aus dem Außenläufer 9 herausragende Teil dargestellt ist. Der Innenstator 10 wiederum ist an einer Lagerplatte 11 befestigt, sodass durch die Lagerplatte 11 sowohl der Antriebsmotor 1 als auch die vom Antriebsmotor 1 gehaltene Bremseinrichtung 8 gelagert ist.

Die Lagerplatte 11 kann auch in den Innenstator 10 integriert bzw. mit dem Innenstator 10 einteilig ausgeführt sein. In diesem Fall ist der aus dem Außenläufer 9 herausgeführte Teil des Innenstators 10 als Lagerschild ausgebildet, der als Lagerplatte 11 dient.

In der bzw. an der Lagerplatte 11 kann auch eine nicht dargestellte elektronische Motorsteuerung oder Komponenten der Steuerelektronik angebracht sein. Die Lagerplatte 11 wiederum ist an dem Träger 3 befestigt. Insbesondere kann die Lagerplatte 11 direkt an ein Getriebegehäuse 4a der Getriebeeinrichtung 4 angeflanscht werden. Das Getriebegehäuse 4a kann z.B. aus zwei Gehäuseschalen gebildet sein.

Selbstverständlich ist es auch möglich, den Antriebsmotor 1 mithilfe seines mit dem Innenstator 10 verbundenen Lagerschilds direkt an dem Träger 3 bzw. dem Getriebegehäuse 4a anzubringen, ohne Zwischenschaltung einer separaten Lagerplatte 11.

Die Motorwelle bzw. Antriebswelle 12 des Antriebsmotors 1 ragt in das Innere der Getriebeeinrichtung 4, sodass die Drehbewegung durch die Getriebeeinrichtung 4 in eine geeignete Bewegung für die Antriebsrolle 2 gewandelt werden kann. Auf der Antriebswelle 12 ist als Bestandteil der Getriebeeinrichtung 4 ein Antriebszahnrad 13 als Antriebsritzel vorgesehen. Der Durchmesser des Antriebszahnrads 13 kann selbstverständlich wesentlich kleiner sein, als in Figur 2 gezeigt. So ist es z.B. möglich, das Antriebszahnrad 13 direkt auf die Antriebswelle 12 zu schneiden.

Die Drehachse 1 a des Antriebsmotors 1 und die Drehachse 2a der Antriebsrolle 2 stehen bei der Variante der Figuren 1 und 2 parallel zueinander.

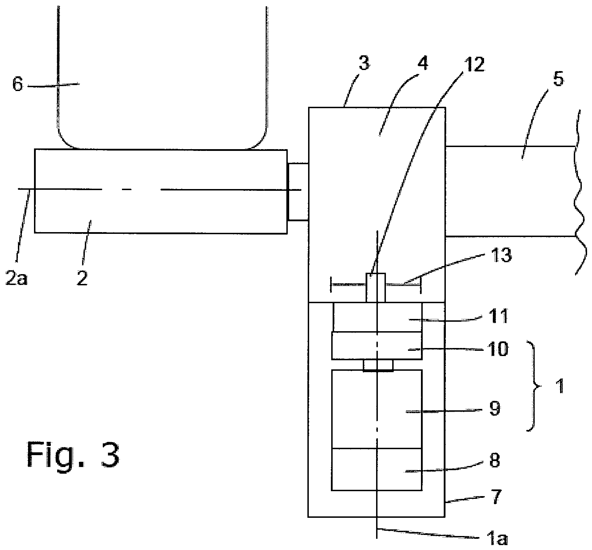

Figur 3 zeigt eine andere Ausführungsform für einen Rangierantrieb, bei der die Drehachse 1 a des Antriebsmotors 1 senkrecht zu der Drehachse 2a der Antriebsrolle 2 steht. Die weiteren Komponenten des Rangierantriebs sind im Wesentlichen identisch aufgebaut, sodass sich eine eingehende Beschreibung erübrigt.

Lediglich die Getriebeeinrichtung 4 muss derart ausgestaltet sein, dass sie die Drehbewegung des Antriebsmotors 1 über den Winkel von 90° wandeln kann. Hierzu eignen sich zum Beispiel Kegelradgetriebe oder Schneckengetriebe.

Auch bei der Variante von Figur 3 ist der Antriebsmotor 1 als bürstenloser Elektromotor mit Außenläufer 9 ausgeführt.

Die Bremseinrichtung 8 aus den Figuren 2 und 3 ist stirnseitig zu dem Außenläufer 9 angeordnet und kann unmittelbar auf die Antriebswelle 12 wirken. Zu diesem Zweck muss die Antriebswelle 12 an der von dem Lagerschild abgewandten Seite des Außenläufers 9 verlängert sein bzw. überstehen, damit das Bremsmoment in die Antriebswelle 12 eingeleitet werden kann.

Die Steuerelektronik für den Antriebsmotor 1 kann unmittelbar auf der Lagerplatte 11 bzw. dem Lagerschild angeordnet sein. Z.B. können die Komponenten der Steuerelektronik auf einer Platine aufgelötet sein, die wiederum in geeigneter Weise auf oder an der Lagerplatte 11 oder dem Lagerschild befestigt ist.

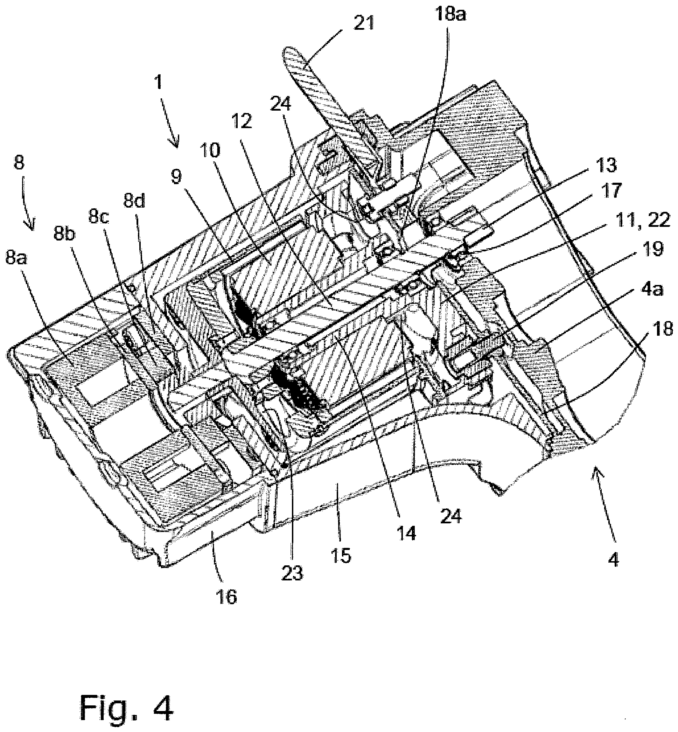

Figur 4 zeigt den Bereich des Antriebsmotors 1 mit der Antriebswelle 12 in Schnittdarstellung mit größerer Detaillierung. Die in Figur 1 gezeigte Abdeckung 7 ist in Figur 4 weggelassen. Sie dient dazu, dem Rangierantrieb eine gefällige äußere Anmutung und ein angemessenes Design zu verleihen.

Der Antriebsmotor weist den Außenläufer 9 auf, der den Innenstator 10 glockenförmig umgibt. Der Außenläufer 9 ist mit der Antriebswelle 12 formschlüssig verbunden, um das Antriebsdrehmoment in die Antriebswelle 12 zu leiten.

Die Antriebswelle 12 ist in einer hülsenartigen Nabe 14 gelagert, die ihrerseits auch den Innenstator 10 trägt bzw. mit diesem einstückig verbunden ist.

Am stirnseitigen Ende der Nabe 14 ist die Lagerplatte 11 als Lagerschild des Antriebsmotors 1 ausgebildet und einstückig mit der Nabe 14 verbunden. Die Lagerplatte 11 ist über nicht dargestellte Schraubverbindungen an der Innenseite eines Motorgehäuses 15 befestigt, so dass damit der gesamte Antriebsmotor 1 an dem Motorgehäuse 15 befestigt ist.

Auf der rückwärtigen Stirnseite des Antriebsmotors 1 ist die Bremseinrichtung 8 an dem Motorgehäuse 15 befestigt. Unter einem Bremsengehäuse 16, welches ebenfalls auf dem Motorgehäuse 15 befestigt ist, ist als Bremseinrichtung 8 eine Magnetbremse eingebaut. Die Bremseinrichtung weist eine Magnetspule 8a auf, die auf einen nicht dargestellten, federbelasteten Anker wirkt. Der Anker ist in dem Freiraum angeordnet, der in Figur 4 in der Magnetspule 8a eingezeichnet ist. Weiterhin ist eine Anpressplatte 8b vorgesehen, gegen die der federbelastete Anker drückt, wenn die Magnetspule 8a nicht erregt ist. Die Anpressplatte 8b wiederum drückt gegen eine Bremsscheibe 8c, die axial zwischen der Anpressplatte 8b und einer Montageplatte 8d angeordnet ist. Die Montageplatte 8d ist an dem Motorgehäuse 15 festgeschraubt, während die Bremsscheibe 8c auf der Antriebswelle 12 befestigt, z.B. formschlüssig aufgesetzt ist.

Die im Betrieb rotierende Bremsscheibe 8c wirkt somit direkt auf das Ende der Antriebswelle 12. Auf diese Weise kann die Bremseinrichtung 8 über die Bremsscheibe 8c die Antriebswelle 12 unmittelbar direkt blockieren.

Die Bremswirkung der Bremseinrichtung 8 tritt im stromlosen Zustand ein, sodass die Antriebswelle 12 wirksam blockiert wird. In diesem Zustand wird der federbelastete Anker gegen die Anpressplatte 8b gedrückt, so dass die Bremsscheibe 8c zwischen der Anpressplatte 8b und der Montageplatte 8d durch Reibung an einer Drehung gehindert wird. Im strombehafteten Zustand hingegen wird der Anker durch die Magnetspule 8a gegen die Federwirkung angezogen und von der Anpressplatte 8b abgehoben. Die Bremsscheibe 8c kann sich dann frei mit der Antriebswelle 12 drehen. In diesem Zustand wirkt die Magnetbremse in der Bremseinrichtung 8 somit derart, dass die Bremse gelöst wird und sich die Antriebswelle 12 frei drehen kann.

Die Bremsscheibe 8c der Bremseinrichtung 8 kann z.B. formschlüssig mit der Antriebswelle 12 verbunden sein, um ein sicheres Bremsen der Antriebswelle 12 zu gewährleisten. Ebenso besteht zwischen dem Außenläufer 9 und der Antriebswelle 12 eine formschlüssige Verbindung.

Am gegenüberliegenden Ende der Antriebswelle 12 ist das Antriebszahnrad 13 als Teil der Getriebeeinrichtung 4 zu erkennen.

Direkt neben dem Antriebszahnrad 13 ist ein Lager 17 vorgesehen, mit dem die Antriebswelle 12 in dem Getriebegehäuse 4a des Trägers 3 gelagert ist. Auf diese Weise kann auch die gesamte Einheit von Antriebsmotor 1 und Bremseinrichtung 8 gegenüber der Getriebeeinrichtung 4 bzw. dem Getriebegehäuse 4a zentriert werden.

Auf der dem Antriebsmotor 1 abgewandten Seite der Lagerplatte 11 ist eine Platine 18 befestigt, die wenigstens einen Teil der Steuerelektronik für die Motorsteuerung des Antriebsmotors 1 trägt. Die Platine 18 weist eine Ausnehmung 18a auf, durch die sich die Antriebswelle 12 erstreckt. Somit kann dieser Teil der Steuerelektronik unmittelbar an der Lagerplatte 11 und damit an dem Antriebsmotor 1 befestigt werden, was unter anderem die Montage erheblich erleichtert. Zudem können auf diese Weise sehr kurze Leitungswege zwischen der Steuerelektronik und dem Antriebsmotor 1 realisiert werden.

Insbesondere sind zwischen der Steuerelektronik bzw. der Platine 18 und der Lagerplatte 11 mehrere Steckverbinder 19 vorgesehen, von denen in Figur 4 jedoch nur einer erkennbar ist. Über die Steckverbinder 19 kann zum Beispiel der elektrische Strom von der Steuerelektronik zum Antriebsmotor 1 bzw. dessen Innenstator 10 geführt werden.

Mit Hilfe der Steckverbinder 19 ist es möglich, die Montage der Platine 18 an der Lagerplatte 11 weiter zu vereinfachen. So muss die Platine 18 lediglich auf die Lagerplatte 11 aufgedrückt werden, um eine Kontaktierung der Steckverbinder 19 zu erreichen. Weitere Verbindungen zwischen dem Antriebsmotor 1 und der Steuerelektronik sind dann nicht erforderlich.

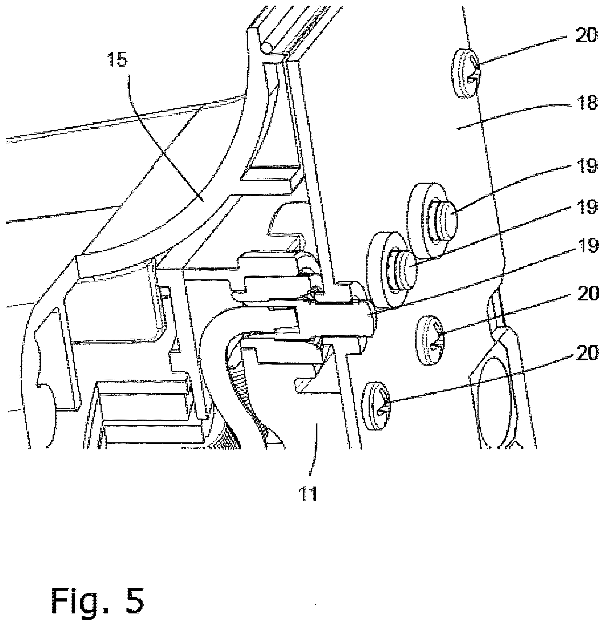

Figur 5 zeigt im Bereich der Steckverbinder 19 eine Teilschnittdarstellung mit größerer Detaillierung. Insbesondere ist erkennbar, dass die Platine 18 mit Hilfe von Schrauben 20 an der Lagerplatte 11 befestigt ist und dabei der Kontakt in den Steckverbindern 19 gehalten wird.

Die Spannungsversorgung zu der Platine 18 kann über Kabelzuleitungen 21 erfolgen, von denen in Figur 4 lediglich eine dargestellt ist.

Die Bremseinrichtung 8, der Antriebsmotor 1, die Lagerplatte 11, die Steuerelektronik mit der Platine 18 und das Antriebszahnrad 13 sind koaxial zueinander in dieser Reihenfolge angeordnet. Dadurch ist ein besonders kompakter, aber einfach (vor-) zu montierender Aufbau realisierbar.

Bei einer Variante ist es möglich, die axiale Reihenfolge dahingehend zu ändern, dass das Antriebszahnrad 13 axial zwischen dem Antriebsmotor 1 und der Bremseinrichtung 8 angeordnet ist. In diesem Fall ist also die Bremseinrichtung 8 in Bezug auf das Antriebszahnrad 13 gegenüberliegend zu dem Antriebsmotor 1 anzuordnen.

Ebenso ist es möglich, die Bremseinrichtung 8 zwischen Antriebsmotor 1 und Zahnrad 13 anzuordnen. Dies kann zum Beispiel zum Zwecke der Kühlung vorteilhaft sein.

Mit Hilfe der Steckverbinder 19 ist es möglich, die elektrischen Anschlussarbeiten für den Antriebsmotor 1 auf ein Minimum zu begrenzen.

Der Außenläufer 9 umgreift glockenartig den stehenden Innenstator 10. Die Antriebswelle 12 ist an dem Außenläufer 9 befestigt und wird durch das Innere des Innenstators 10 bzw. durch die einen Teil des Innenstators 10 bildende Hülse bzw. Nabe 14 geführt. Dementsprechend ist der Außenläufer 9 mit der Antriebswelle 12 an dem Innenstator 10 bzw. der Nabe 14 gelagert.

Mit dem Innenstator 10 einstückig verbunden ist ein Lagerschild 22, der als Lagerplatte 11 dient. Die Lagerplatte 11 kann auch als separates Teil ausgebildet sein, so dass der Innenstator 10 auf der Lagerplatte 11 befestigt werden kann.

Im stirnseitigen Teil des Außenläufers 9 sind Flügel eines Kühllüfterrads 23 integriert. Bei Drehung des Außenläufers 9 erzeugen die Flügel des Kühllüfterrads 23 einen Luftstrom, der zur Kühlung des Antriebsmotors 1 genutzt wird. Zur ausreichenden Luftversorgung sind Lüftungsöffnungen 24 vorgesehen.

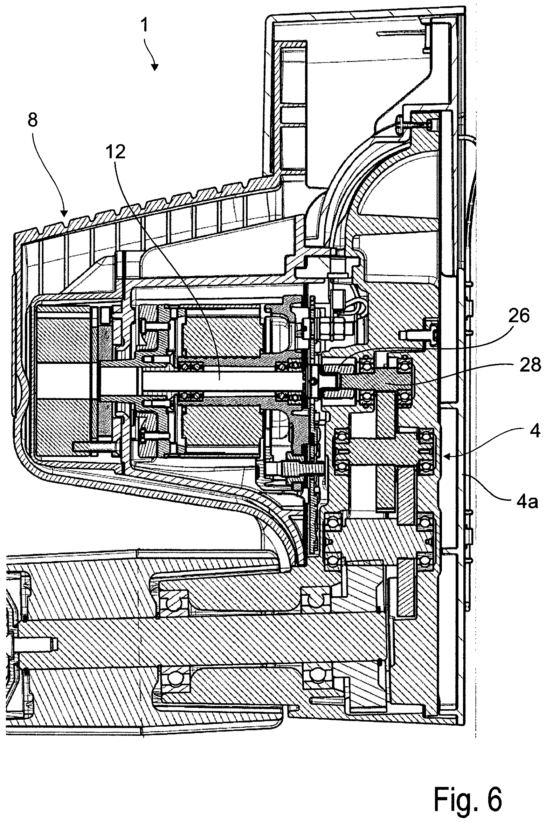

In der Figur 6 ist eine weitere Ausführungsform des Rangierantriebs gezeigt, die sich gegenüber der zuvor beschriebenen Ausführungsform dadurch unterscheidet, dass im gezeigten Antriebsstrang zusätzlich eine nachgiebige Kupplungseinrichtung 26 vorgesehen ist, welche insbesondere in der Getriebeeinrichtung 4 bzw. im Getriebegehäuse 4a ausgebildet sein kann. Die Kupplungseinrichtung 26 ist zur Schwingungsdämpfung und/oder zur Überbrückung von leicht schräg und/oder nicht parallel zueinander stehenden Wellen und/oder zum Ausgleich von Passungstoleranzen bei der Motorbefestigung vorgesehen.

Die Kupplungseinrichtung 26 verbindet die Antriebswelle 12 des Antriebs 1 mit der Getriebeeinrichtung 4, wobei zur Koppelung typischerweise ein Ritzel 28 vorhanden ist. Natürlich kann eine solche Kupplung auch an anderen Wellenverbindungen vorgesehen sein, auch im Bereich der Bremse.

Bei der Kupplungseinrichtung 26 handelt es sich um eine drehschwingungsdämpfende Wellenkupplung, insbesondere um eine Klauen- oder eine Balgkupplung.

Die Wellenkupplung ist vorzugsweise zwischen der motorseitigen Welle und dem ersten Ritzel des Getriebes angeordnet.

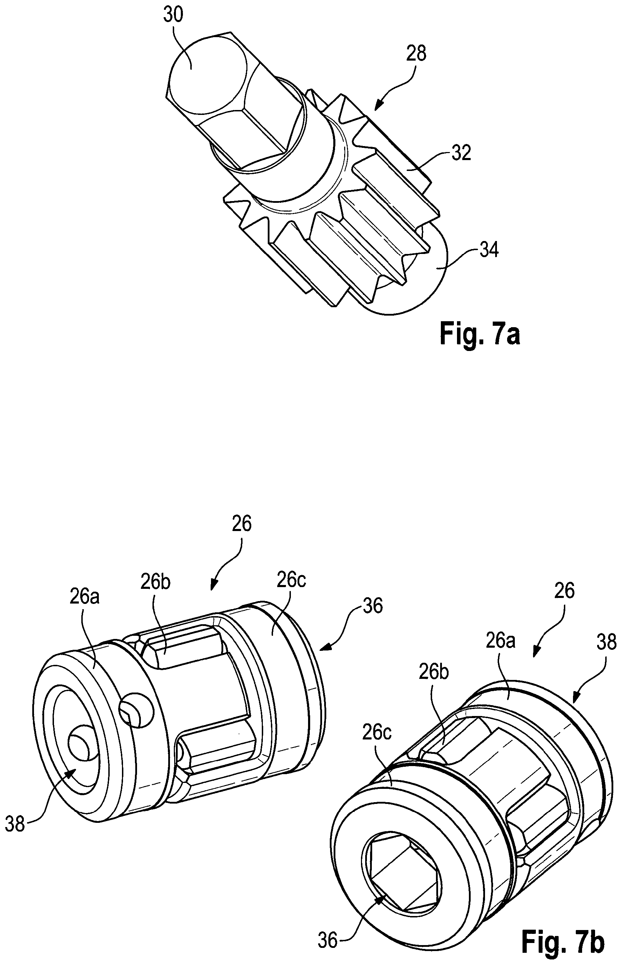

Die Wellenkupplung ist zur Dämpfung typischerweise aus mindestens drei Teilen aufgebaut (Figur 7b). Ein erster Teil 26a mit axial vorstehenden Fingern dient zur Kupplung mit der Antriebswelle 12. Das von der Antriebswelle 12 übertragene Drehmoment bzw. die Drehbewegung wird über ein zweites Teil 26b, das aus einem Elastomer besteht, an das ebenfalls axiale Finger aufweisende dritte Teil 26c übertragen, welches mit der Getriebeeinrichtung 4 gekoppelt ist und welches sich aufgrund der Nachgiebigkeit des zweiten Teils 26b leicht gegenüber dem ersten Teil 26a verdrehen kann. Das zweite Teil 26b erstreckt sich zwischen benachbarte Finger des ersten und des dritten Teils 26a und 26c.

Das zweite Teil 26b kann insbesondere als Elastomerstern ausgebildet sein.

Bei der Kupplungseinrichtung 26 handelt es sich somit um eine Elastomerkupplung.

Ein bei der Kupplungseinrichtung 26 verwendbares Ritzel 28 sowie eine beispielhafte Kupplungseinrichtung 26 sind in der Figur 7 gezeigt.

Das Ritzel 28 ist derart ausgeführt, dass es einen ersten axialen Endabschnitt 30, an dem ein Mehrkantprofil ausgebildet ist, einen den Ritzelabschnitt aufweisenden Hauptteil 32, und einen zweiten axialen Endabschnitt 34 umfasst, der vorrangig zur Lagerung des Ritzels 28 in der Getriebeeinrichtung 4 fungiert.

Das Ritzel 28 ist über das am ersten axialen Endabschnitt 30 ausgebildete Mehrkantprofil mit einer Aufnahme 36 der Kupplungseinrichtung 26 koppelbar (Figur 7b). Die Aufnahme 36 weist hierzu ebenfalls ein Mehrkantprofil auf, sodass das Ritzel 28 in die Aufnahme 36 formschlüssig einsetzbar bzw. einsteckbar ist.

Über das derart gestaltete Ritzel 28 sowie die entsprechende Kupplungseinrichtung 26 kann das Drehmoment des Antriebs 1 auf die Getriebeeinrichtung 4 wirksam übertragen werden, wobei hierfür das Ritzel 28 nicht mittels eines Stiftes oder ähnlichem in der Kupplungseinrichtung 26 gesichert werden muss.

Die der Aufnahme 36 entgegengesetzte Antriebswellenaufnahme 38 ist in der gezeigten Ausführungsform der Kupplungseinrichtung 26 so ausgebildet, dass die Antriebswelle 12 verstiftet werden muss oder durch andere geeignete Sicherungsmöglichkeiten (ggf. geometrische Bauteilausführungen) gesichert ist, um mit der Kupplungseinrichtung 26 sicher fixiert zu sein.

Die Antriebswellenaufnahme 38 und die Antriebswelle 12 können in einer alternativen Ausführungsform jedoch ebenfalls mit einem Mehrkantprofil ausgebildet sein.

Alternativ ist auch vorstellbar, dass die Kupplungseinrichtung 26 über eine Klebeverbindung fixiert wird.

## Patentansprüche

1. Rangierantrieb für einen Anhänger, mit
- einer Befestigungseinrichtung (5) zum Befestigen an dem Anhänger;
- einem relativ zu der Befestigungseinrichtung (5) bewegbaren Träger (3);
- einem von dem Träger (3) gehaltenen Antriebsmotor (1);
- einer von dem Antriebsmotor (1) drehend antreibbaren Antriebsrolle (2); und mit
- einer Bremseinrichtung (8) zum Bremsen einer Drehbewegung der Antriebsrolle (2);
**dadurch gekennzeichnet, dass**
- der Antriebsmotor (1) und die Bremseinrichtung (8) koaxial zueinander angeordnet sind; und dass
- im Kraftfluss zwischen dem Antriebsmotor (1) und der Antriebsrolle (2) eine Getriebeeinrichtung (4) vorgesehen ist, die keine Selbsthemmung aufweist.

2. Rangierantrieb nach Anspruch 1, **dadurch gekennzeichnet, dass**
- der Antriebsmotor (1) eine Antriebswelle (12) aufweist; und dass
- die Bremseinrichtung (8) auf der Antriebswelle (12) angeordnet ist.

3. Rangierantrieb nach Anspruch 1 oder 2, **dadurch gekennzeichnet, dass** ein zu der Getriebeeinrichtung (4) gehörendes Antriebszahnrad (13) auf der Antriebswelle (12) vorgesehen ist.

4. Rangierantrieb nach einem der vorangehenden Ansprüche, **dadurch gekennzeichnet, dass**
- wenigstens ein Teil einer Steuerelektronik für den Antriebsmotor (1) stirnseitig zu dem Antriebsmotor (1) angeordnet ist, wobei die Steuerelektronik eine Platine (18) aufweist, die von der Antriebswelle (12) durchdrungen wird; und/oder dass
- wenigstens ein Teil der Steuerelektronik seitlich zu dem Antriebsmotor (1) angeordnet ist.

5. Rangierantrieb nach einem der vorangehenden Ansprüche, **dadurch gekennzeichnet, dass**
- der Antriebsmotor (1) stirnseitig eine Lagerplatte (11) aufweist.

6. Rangierantrieb nach Anspruch 4 und 5, **dadurch gekennzeichnet, dass** die Steuerelektronik auf der Lagerplatte (11) angeordnet, insbesondere auf der Lagerplatte (11) befestigt ist.

7. Rangierantrieb nach den Ansprüchen 4 und 5 oder nach Anspruch 6, **dadurch gekennzeichnet, dass** zwischen der Lagerplatte (11) und der Steuerelektronik eine Steckverbindung (19) vorgesehen ist, zum Übertragen eines elektrischen Stroms.

8. Rangierantrieb nach einem der vorangehenden Ansprüche, **dadurch gekennzeichnet, dass**
- eine Lüftungseinrichtung (23) zum Kühlen des Antriebsmotors (1) vorgesehen ist; und dass
- die Lüftungseinrichtung (23) auf der Antriebswelle (12) angeordnet ist.

9. Rangierantrieb nach einem der vorangehenden Ansprüche, **dadurch gekennzeichnet, dass** wenigstens zwei der folgenden Komponenten auf einer gemeinsamen Achse zueinander in der folgenden axialen Reihenfolge angeordnet sind:
- Bremseinrichtung (8)
- Antriebsmotor (1)
- Lagerplatte (11)
- Steuerelektronik (18)
- Antriebszahnrad (13).

10. Rangierantrieb nach einem der vorangehenden Ansprüche, **dadurch gekennzeichnet, dass** der Antriebsmotor (1) ein bürstenloser Elektromotor mit einem Außenläufer (9) ist.

11. Rangierantrieb nach Anspruch 10, **dadurch gekennzeichnet, dass** die Bremseinrichtung (8) an dem Außenläufer (9) oder an einem Motorgehäuse (15) befestigt ist.

12. Rangierantrieb nach Anspruch 10 oder 11, sofern rückbegzogen auf Anspruch 8, **dadurch gekennzeichnet, dass**
- der Antriebsmotor (1) einen Innenstator (10) aufweist;
- der Außenläufer (9) den Innenstator (10) glockenförmig umgibt; und dass
- der Außenläufer (9) ein zu der Lüftungseinrichtung gehörendes Kühllüfterrad aufweist.

13. Rangierantrieb nach einem der vorangehenden Ansprüche, **dadurch gekennzeichnet, dass** die Drehachse (1a) des Antriebsmotors (1) parallel oder senkrecht oder in einem schrägen Winkel zu der Drehachse (2a) der Antriebsrolle (2) verläuft.

14. Rangierantrieb nach einem der vorangehenden Ansprüche, **dadurch gekennzeichnet, dass** eine Bewegungseinrichtung vorgesehen ist, zum Bewegen des Trägers (3) zwischen einer Ruheposition, in der die Antriebsrolle (2) von einem Rad (6) des Anhängers getrennt ist, und einer Antriebsposition, in der die Antriebsrolle (2) gegen das Rad (6) des Anhängers gedrückt wird.

15. Rangierantrieb nach einem der vorangehenden Ansprüche, **dadurch gekennzeichnet, dass** im Antriebsstrang eine nachgiebige Kupplungseinrichtung (26) vorgesehen ist, insbesondere in der Getriebeeinrichtung (4).

## Claims

1. A maneuvering drive for a trailer, comprising
- a fastening means (5) for fastening to the trailer;
- a carrier (3) movable relative to the fastening means (5);
- a drive motor (1) held by the carrier (3);
- a drive roller (2) adapted to be rotatably driven by the drive motor (1); and comprising
- a braking means (8) for braking a rotary movement of the drive roller (2);
**characterized in that**
- the drive motor (1) and the braking means (8) are arranged coaxially with each other; and **in that**
- in the flux of force between the drive motor (1) and the drive roller (2) a transmission means (4) is provided, which has no self-locking feature.

2. The maneuvering drive according to claim 1, **characterized in that**
- the drive motor (1) includes a drive shaft (12); and **in that**
- the braking means (8) is arranged on the drive shaft (12).

3. The maneuvering drive according to claim 1 or 2, **characterized in that** a drive gear (13) associated with the transmission means (4) is provided on the drive shaft (12).

4. The maneuvering drive according to any of the preceding claims, **characterized in that**
- at least a part of a control electronics for the drive motor (1) is arranged on the end face of the drive motor (1), the control electronics including a board (18) which is penetrated by the drive shaft (12); and/or **in that**
- at least a part of the control electronics is arranged laterally of the drive motor (1).

5. The maneuvering drive according to any of the preceding claims, **characterized in that**
- the drive motor (1) includes a bearing plate (11) on the end face.

6. The maneuvering drive according to claim 4 and 5, **characterized in that** the control electronics is arranged on the bearing plate (11), in particular is fixed on the bearing plate (11).

7. The maneuvering drive according to claims 4 and 5 or according to claim 6, **characterized in that** a plug connection (19) for transmitting an electric current is provided between the bearing plate (11) and the control electronics.

8. The maneuvering drive according to any of the preceding claims, **characterized in that**
- a ventilation means (23) is provided for cooling the drive motor (1); and **in that**
- the ventilation means (23) is arranged on the drive shaft (12).

9. The maneuvering drive according to any of the preceding claims, **characterized in that** at least two of the following components are arranged on a common axis relative to each other in the following axial order:
- braking means (8)
- drive motor (1)
- bearing plate (11)
- control electronics (18)
- drive gear (13).

10. The maneuvering drive according to any of the preceding claims, **characterized in that** the drive motor (1) is a brushless electric motor with an external rotor (9).

11. The maneuvering drive according to claim 10, **characterized in that** the braking means (8) is attached to the external rotor (9) or to a motor housing (15).

12. The maneuvering drive according to claim 10 or 11, as far as dependent on claim 8, **characterized in that**
- the drive motor (1) includes an internal stator (10);
- the external rotor (9) surrounds the internal stator (10) in a bell-shaped manner; and that
- the external rotor (9) includes a cooling fan wheel associated with the ventilation means.

13. The maneuvering drive according to any of the preceding claims, **characterized in that** the axis of rotation (1a) of the drive motor (1) extends parallel or perpendicular or at an oblique angle to the axis of rotation (2a) of the drive roller (2).

14. The maneuvering drive according to any of the preceding claims, **characterized in that** a moving means is provided for moving the carrier (3) between a rest position, in which the drive roller (2) is separated from a wheel (6) of the trailer, and a drive position in which the drive roller (2) is pressed against the wheel (6) of the trailer.

15. The maneuvering drive according to any of the preceding claims, **characterized in that** a resilient coupling means (26) is provided in the drive train, in particular in the transmission means (4).

## Revendications

1. Entraînement de manoeuvre pour une remorque, comportant
- un moyen de fixation (5) pour la fixation sur la remorque;
- un support (3) mobile par rapport au moyen de fixation (5);
- un moteur d'entraînement (1) maintenu par le support (3);
- un rouleau d'entraînement (2) apte à être entraîné en rotation par le moteur d'entraînement (1); et comportant
- un moyen de freinage (8) pour le freinage d'un mouvement de rotation du rouleau d'entraînement (2);
**caractérisé en ce que**
- le moteur d'entraînement (1) et le moyen de freinage (8) sont agencés de manière coaxiale l'un par rapport à l'autre; et **en ce que**
- un moyen de transmission (4) sans blocage automatique est prévu dans le flux de force entre le moteur d'entraînement (1) et le rouleau d'entraînement (2).

2. Entraînement de manoeuvre selon la revendication 1, **caractérisé en ce que**
- le moteur d'entraînement (1) présente un arbre d'entraînement (12); et **en ce que**
- le moyen de freinage (8) est agencé sur l'arbre d'entraînement (12).

3. Entraînement de manoeuvre selon la revendication 1 ou 2, **caractérisé en ce qu'**une roue dentée motrice (13) appartenant au moyen de transmission (4) est prévue sur l'arbre d'entraînement (12).

4. Entraînement de manoeuvre selon l'une des revendications précédentes, **caractérisé en ce que**
- au moins une partie d'une électronique de commande pour le moteur d'entraînement (1) est agencée côté face frontale par rapport au moteur d'entraînement (1), l'électronique de commande présentant une platine (18) à travers laquelle l'arbre d'entraînement (12) passe; et/ou **en ce que**
- au moins une partie de l'électronique de commande est agencée latéralement par rapport au moteur d'entraînement (1).

5. Entraînement de manoeuvre selon l'une des revendications précédentes, **caractérisé en ce que**
- le moteur d'entraînement (1) présente côté face frontale une plaque support (11).

6. Entraînement de manoeuvre selon les revendications 4 et 5, **caractérisé en ce que** l'électronique de commande est agencée sur la plaque support (11) et est en particulier fixée sur la plaque support (11).

7. Entraînement de manoeuvre selon les revendications 4 et 5 ou selon la revendication 6, **caractérisé en ce qu'**entre la plaque support (11) et l'électronique de commande il est prévu une liaison par enfichage (19) pour le transfert d'un courant électrique.

8. Entraînement de manoeuvre selon l'une des revendications précédentes, **caractérisé en ce que**
- il est prévu un moyen d'aération (23) pour le refroidissement du moteur d'entraînement (1); et **en ce que**
- le moyen d'aération (23) est agencé sur l'arbre d'entraînement (12).

9. Entraînement de manoeuvre selon l'une des revendications précédentes, **caractérisé en ce qu'**au moins deux des composants suivants sont agencés sur un axe commun dans l'ordre axial suivant les uns par rapport aux autres:
- moyen de freinage (8)
- moteur d'entraînement (1)
- plaque support (11)
- électronique de commande (18)
- roue dentée motrice (13).

10. Entraînement de manoeuvre selon l'une des revendications précédentes, **caractérisé en ce que** le moteur d'entraînement (1) est un moteur électrique sans balais qui présente un rotor extérieur (9).

11. Entraînement de manoeuvre selon la revendication 10, caractérisé en ce le moyen de freinage (8) est fixé sur le rotor extérieur (9) ou sur un boîtier de moteur (15).

12. Entraînement de manoeuvre selon la revendication 10 ou 11, dans la mesure où elles dépendent de la revendication 8, **caractérisé en ce que**
- le moteur d'entraînement (1) présente un stator intérieur (10);
- le rotor extérieur (9) entoure le stator intérieur (10) en forme de cloche; et **en ce que**
- le rotor extérieur (9) présente une roue de ventilateur de refroidissement appartenant au moyen d'aération.

13. Entraînement de manoeuvre selon l'une des revendications précédentes, **caractérisé en ce que** l'axe de rotation (1a) du moteur d'entraînement (1) s'étend de manière parallèle ou perpendiculaire ou selon un angle oblique par rapport à l'axe de rotation (2a) du rouleau d'entraînement (2).

14. Entraînement de manoeuvre selon l'une des revendications précédentes, **caractérisé en ce qu'**il est prévu un moyen de déplacement pour déplacer le support (3) entre une position de repos dans laquelle le rouleau d'entraînement (2) est séparé d'une roue (6) de la remorque, et une position d'entraînement dans laquelle le rouleau d'entraînement (2) est pressé contre la roue (6) de la remorque.

15. Entraînement de manoeuvre selon l'une des revendications précédentes, **caractérisé en ce qu'**un moyen d'embrayage (26) flexible est prévu dans le train d'entraînement, en particulier dans le moyen de transmission (4).
